# EUROPEAN PATENT SPECIFICATION

(11) **EP 1 046 317 B1**
(45) Date of publication and mention of the grant of the patent: **18.04.2007**
(21) Application number: 99900476.5
(22) Date of filing: 08.01.1999
(51) Int. Cl.: H04Q 7/38

(54) **METHOD AND SYSTEM FOR CHANGING SUBSCRIBER PROFILE BASED ON IDENTITY OF BASE STATION SERVING THE TERMINAL EQUIPMENT**
VERFAHREN UND SYSTEM ZUR VERÄNDERUNG DES TEILNEHMERPROFILS BASIERT AUF DER IDENTITÄT DER DAS ENDGERÄT BEDIENENDEN BASISSTATION
SYSTEME ET PROCEDE PERMETTANT DE MODIFIER LE PROFIL D'ABONNE EN FONCTION DE L'IDENTITE DE LA STATION DE BASE DESSERVANT LE TERMINAL

(30) Priority: 09.01.1998 FI 980036
(43) Date of publication of application: 25.10.2000
(73) Proprietor: TeliaSonera Finland Oyj, 00510 Helsinki (FI)
(72) Inventor: KESKI-HEIKKILÄ, Mika, 00051 Sonera (FI); LINKOLA, Janne, 02210 Espoo (FI); HOKKANEN, Tuomo, 00820 Helsinki (FI)
(74) Representative: Helino, Timo Kalervo
(86) International application number: PCT/FI1999/000010
(87) International publication number: WO 1999/035869

(56) References cited:
- EP-A1- 0 597 638
- WO-A1-97/11569
- US-A- 5 295 180
- US-A- 5 434 798

## Description

The present invention relates to a method as defined in the preamble of claim 1 for changing a subscriber profile based on the identity of the base station serving a terminal equipment. Moreover, the invention relates to a system as defined in the preamble of claim 4 for changing a subscriber profile based on the identity of the base station serving a terminal equipment.

In the near future it is to be expected that there will be a growing demand for various applications and services that need the identity of the base station serving the terminal equipment in mobile communication networks. Based on subscriber movements, the subscriber profile can be modified, e.g. by limiting/extending services or changing applications, depending on the cell in whose area the subscriber is currently located. An example of this is the home cell pricing policy, according to which the subscriber's calls are charged for at a reduced rate when the terminal equipment is within the area of so-called home cells.

In present mobile communication systems, however, changing the subscriber profile on the basis of base station identity is difficult. This is because base stations do not have a permanent identity (for a period of months - years). The CGI information (Cell Global Identity, CGI) transmitted in the BCCH channel (Broadcast Control Channel, BCCH) contains e.g. a cell identifier, but in network reconfigurations the identifiers occasionally have to be changed. Some of the changes apply to only one base station at a time, so applications and services could be designed to utilise the identifiers of a plurality of base stations, in which case changing the identifier of one of the base stations would not necessarily confuse the application. Other changes such as BSC switchover, apply to a large number of base stations at a time, so in this case the above-mentioned technique of monitoring a plurality of base stations is not applicable. In short, designing and constructing a system for changing the subscriber profile on the basis of base station identity is at present either impossible or at least very expensive.

WO9711569 discloses a method wherein the service may be a special billing rate based on where a mobile-originated call is initiated. US5295180 discloses a system for marking a plurality of zones within a cellular service area. One or more marker transmitters are disposed throughout a cellular area to transmit a zone identification signal that is independent of normal RF cellular coverage to a mobile or portable cellular receiver. EP0597638 discloses a further location-based billing system wherein the charging tariff applicable to each mobile depends on the area in which it is located. For example, each mobile may operate on a low rate tariff when in its own or local area and on a higher rate elsewhere.

The object of the present invention is to disclose a new type of method and system to eliminate the drawbacks described above.

A specific object of the invention is to disclose a method for changing the subscriber profile on the basis of the identity of the base station serving the terminal equipment in a mobile communication network. A further object of the invention is to disclose a system for changing the subscriber profile on the basis of the identity of the base station serving the terminal equipment in a mobile communication network.

As for the features characteristic of the invention, reference is made to the claims.

The invention is related to a method for changing a subscriber profile on the basis of the identity of the base station serving a terminal equipment in a mobile communication network, in which method information signals are sent by the base station and the information signals are received by the terminal equipment, which comprises a mobile station provided with a subscriber identity module. The method comprises creating and assigning to a base station, with a server comprising a supervision software, a permanent base station identity designation that uniquely identifies the base station independent of mobile communication network configuration changes; transmitting from the base station to the terminal equipment, an information signal for receipt by the terminal equipment when the terminal equipment is in an area served by the base station, the information signal comprising the permanent base station identity designation and a cell global identity. The method is characterized in that changing, by the terminal equipment, the subscriber profile based on the permanent base station identity designation received by the terminal equipment of the subscriber from the base station by limiting or extending services or changing applications.

As compared with prior art, the present invention provides the advantage that a more stable extra identity is created for each base station, and this identity is sent by the base station to the subscribers in its area. Thus, each terminal device is at all times informed as to the base station in whose area it is currently located. The base station identity is not changed in conjunction with network reconfiguration as in prior-art solutions. Therefore, changing the subscriber profile on the basis of subscriber movements is accomplished flexibly and considerably more easily and at a lower cost than before.

In an embodiment of the method, the permanent base station identity designation is transmitted in the cell broadcast channel (CBCH) or some other channel suited for the purpose.

In an embodiment of the method, the mobile communication network is based on digital technology, such as GSM technology. DCS1800 technology or equivalent.

The invention is also related to system for changing a subscriber profile on the basis of the identity of the base station serving a terminal equipment in a mobile communication network, said system comprising a base station which sends information signals and terminal equipment which comprises a mobile station provided with a subscriber identity module and receives the information signals. The system comprises a server comprising a supervision software configured to create and assign to a base station a permanent base station identity designation that uniquely identifies the base station independent of mobile communication network configuration changes; the system comprises means for including in the information signals the permanent base station identity designation of the base station which is independent of configuration changes in the mobile communication network and a cell global identity. The system is characterized in that the terminal equipment further comprises means for changing, by the terminal equipment, the subscriber profile based on the permanent base station identity designation received by the terminal equipment of the subscriber from the base station by limiting or extending services or changing applications.

Moreover, according to the invention, the terminal equipment comprises means for changing the subscriber profile on the basis of the permanent identity of the base station serving the terminal equipment.

In an embodiment of the system, the permanent base station identity designation is transmitted in the cell broadcast channel (CBCH) or in some other channel suited for the purpose.

In an embodiment of the system, the mobile communication network is based on digital technology, such as GSM technology, DCS1800 technology or equivalent.

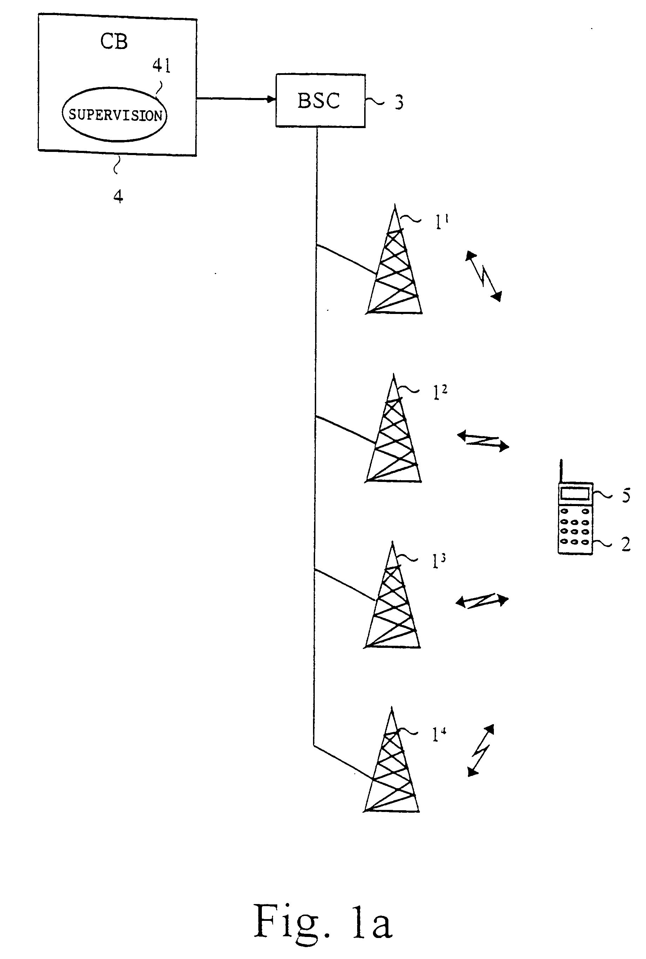

In the following, the invention will be described by the aid of a few examples of its embodiments by referring to the attached drawing, wherein
Fig. 1a presents a system according to the present invention;

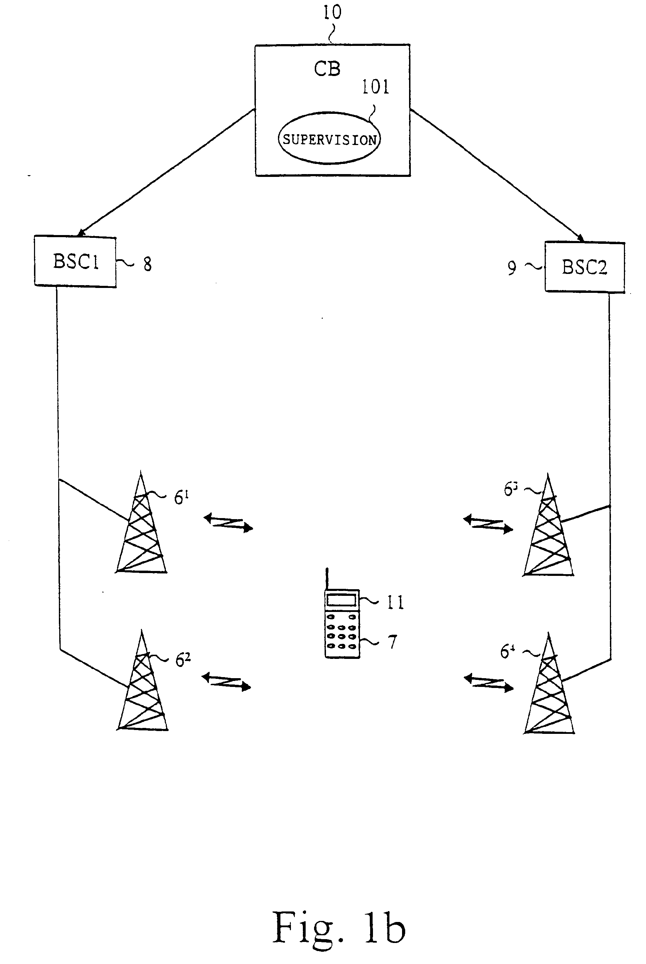

Fig. 1b presents a system according to the present invention.

The mobile communication system presented in Fig, 1a, which in this example is a system based on GSM technology, comprises four base stations 1¹, 1², 1³ and 1⁴. The base stations are connected to a base station controller (BSC) 3, which again is connected to a cell broadcast (CB) server 4. Implemented in the cell broadcast server 4 is supervision software 41. which is used to create an extra identity of permanent nature for each one of the base stations 1¹, 1², 1³ and 1⁴. In practice, the identity may consist of e.g. a sequence number. The supervision software 41 and the base station controller 3 see to it that the identity assigned to each base station 1¹, 1², 1³ and 1⁴ is included in the information signal sent by the base station. Moreover, the supervision software 41 and the base station controller 3 take care of preserving the same identity for each base station after changes made in the network. The base stations 1¹, 1², 1³ and 1⁴ send the information signals e.g. in the cell broadcast channel (CBCH).

Furthermore, Fig. 1a shows a terminal 2, which forms an essential part of the system. The system may comprise an almost unlimited number of terminals. The terminal equipment comprises a mobile station provided with a subscriber identity module. Moreover, the terminal equipment 2 comprises means 5 for changing the subscriber profile on the basis of the identity of the base station currently serving the terminal. These means 5 may consist of e.g. software implemented in the subscriber identity module and/or a separate device connected to the mobile station. They are used to receive the information signal and with it the permanent identity of the base station serving the terminal equipment. Subscriber profile changes are made on the basis of the permanent identity. A change in subscriber profile may consist of e.g. lower call charges if the subscriber remains within the area of predetermined home cells.

Fig. 1b presents a system corresponding to that in Fig. 1a after BSC switchover. In BSC switchover, which is a network reconfiguration procedure commonly used in mobile communication systems, base stations 6¹, 6², 6³ and 6⁴ originally controlled by a single base station controller are allotted to several base station controllers 8, 9. In prior-art implementations this changes the base station identities, whereas the identity according to the invention remains the same, this being taken care of by the supervision software 101 implemented in the cell broadcast server 10 and the base station controllers 8 and 9. The terminal equipment 7 comprises means 11 for changing the subscriber profile on the basis of the identity of the base station currently serving the terminal equipment, as in the previous example.

The invention is not restricted to the examples of its embodiments described above, but many variations are possible within the scope of the inventive idea defined by the claims.

## Claims

1. Method for changing a subscriber profile on the basis of the identity of the base station serving a terminal equipment in a mobile communication network, in which method information signals are sent by the base station and the information signals are received by the terminal equipment, which comprises a mobile station provided with a subscriber identity module, the method comprising:
- creating and assigning to a base station, with a server comprising a supervision software, a permanent base station identity designation that uniquely identifies the base station independent of mobile communication network configuration changes;
- transmitting, from the base station to the terminal equipment, an information signal for receipt by the terminal equipment when the terminal equipment is in an area served by the base station, the information signal comprising the permanent base station identity designation and a cell global identity; and
- changing, by the terminal equipment, the subscriber profile based on the permanent base station identity designation received by the terminal equipment of the subscriber from the base station by limiting or extending services or changing applications.

2. Method as defined in claim 1, wherein the permanent base station identity designation is transmitted in the cell broadcast channel (CBCH).

3. Method as defined in claim 1 or 2, wherein the mobile communication network is based on digital technology, such as the GSM technology.

4. System for changing a subscriber profile on the basis of the identity of the base station serving a terminal equipment in a mobile communication network, said system comprising a base station (1¹,...,1ⁿ) which is adapted to send information signals and the terminal equipment (2) which comprises a mobile station provided with a subscriber identity module and is adapted to receive the information signals, the system comprising:
- a server (4) comprising a supervision software (41) configured to create and assign to a base station a permanent base station identity designation that uniquely identifies the base station independent of mobile communication network configuration changes;
- the system comprises means (3, 4, 41) for including in the information signals the permanent base station identity designation of the base station (1¹,...,1ⁿ) which is independent of configuration changes in the mobile communication network and a cell global identity; and
- the terminal equipment (2) further comprises means (5) for changing, by the terminal equipment, the subscriber profile based on the permanent base station (1¹,...,1ⁿ) identity designation received by the terminal equipment of the subscriber from the base station by limiting or extending services or changing applications.

5. System as defined in claim 4, further comprising means for transmitting the permanent base station (1¹,..., 1ⁿ) identity designation in the cell broadcast channel (CBCH).

6. System as defined in claim 4 or 5, wherein the mobile communication network is based on digital technology, such as GSM technology.

## Patentansprüche

1. Verfahren zum Verändern eines Teilnehmerprofils auf der Grundlage der Identität der ein Endgerät bedienenden Basisstation in einem Mobilkommunikationsnetzwerk, wobei bei dem Verfahren Informationssignale von der Basisstation gesendet werden und die Informationssignale von dem Endgerät, welches eine Mobilstation mit einem Teilnehmeridentitätsmodul aufweist, empfangen werden, wobei das Verfahren die folgenden Verfahrensschritte aufweist:
Erzeugen einer permanenten Basisstationsidentitätskennzeichnung und Zuweisen derselben zu einer Basisstation, wobei die Basisstationsidentitätskennzeichnung die Basisstation unabhängig von Konfigurationsänderungen des Mobilkommunikationsnetzwerks eindeutig identifiziert;
Übertragen eines Informationssignals von der Basisstation zu dem Endgerät zum Empfang durch das Endgerät, wenn das Endgerät in einem von der Basisstation bedienten Bereich ist, wobei das Informationssignal die permanente Basisstationsidentitätskennzeichnung und eine globale Zellenidentität aufweist; und
Verändern des Teilnehmerprofils durch das Endgerät auf Grundlage der von dem Endgerät des Teilnehmers von der Basisstation empfangenen permanenten Basisstationsidentitätskennzeichnung, indem Dienste eingeschränkt oder erweitert oder Anwendungen verändert werden.

2. Verfahren nach Anspruch 1, wobei die permanente Basisstationsidentitätskennzeichnung in dem Zellensendekanal bzw. Cell Broadcast Channel (CBCH) übertragen wird.

3. Verfahren nach Anspruch 1 oder 2, wobei das Mobilkommunikationsnetzwerk auf einer digitalen Technologie, wie zum Beispiel der GSM-Technologie, basiert.

4. System zur Veränderung eines Teilnehmerprofils auf der Grundlage der Identität der ein Endgerät bedienenden Basisstation in einem Mobilkommunikationsnetzwerk, wobei das System eine Basisstation (1¹...1ⁿ), welche dazu ausgebildet ist, Informationssignal zu senden, und das Endgerät (2) aufweist, welches eine Mobilstation aufweist, die mit einem Teilnehmeridentitätsmodul versehen und dazu ausgebildet ist, die Informationssignale zu empfangen, das System aufweisend:
- einen Server (4), welcher eine Überwachungssoftware (41) aufweist, die dazu konfiguriert ist, eine permanente Basisstationsidentitätskennzeichnung zu erzeugen und dieselbe einer Basisstation zuzuweisen, wobei die Basisstationsidentitätskennzeichnung die Basisstation unabhängig von Konfigurationsänderungen des Mobilkommunikationsnetzwerks eindeutig identifiziert;
- wobei das System Einrichtungen (3, 4, 41) zur Einfügung der permanenten Basisstationsidentitätskennzeichnung der Basisstation (1¹...1ⁿ), welche unabhängig von Konfigurationsänderungen in dem Mobilkommunikationsnetzwerk ist, und einer globalen Zellenidentität in die Informationssignale aufweist; und
- wobei das Endgerät (2) weiterhin Einrichtungen (5) zur Veränderung des Teilnehmerprofils auf Grundlage der durch das Endgerät von der Basisstation empfangenen permanenten Identitätskennzeichnung der Basisstation (1¹...1ⁿ) durch Einschränkung oder Erweiterung von Diensten oder Veränderung von Anwendungen aufweist.

5. System nach Anspruch 4, welches weiterhin Einrichtungen zur Übertragung der permanenten Identitätskennzeichnung der Basisstation (1¹...1ⁿ) in dem Zellensendekanal (CBCH) aufweist.

6. System nach Anspruch 4 oder 5, wobei das Mobilkommunikationsnetzwerk auf digitaler Technologie, wie zum Beispiel GSM-Technologie, basiert.

## Revendications

1. Procédé destiné à modifier un profil d'abonné sur la base de l'identité de la station de base desservant un équipement terminal dans un réseau de communication mobile, dans lequel des signaux d'information sont envoyés par la station de base et les signaux d'information sont reçus par l'équipement terminal, qui comporte une station mobile prévue avec un module d'identité d'abonné, le procédé comportant les étapes consistant à :
- créer et affecter à une station de base, avec un serveur comportant un logiciel de supervision, une désignation d'identité de station de base permanente qui identifie uniquement la station de base indépendamment de modifications de configuration de réseau de communication mobile ;
- transmettre, à partir de la station de base vers l'équipement terminal, un signal d'information en vue de sa réception par l'équipement terminal lorsque l'équipement terminal est une zone desservie par la station mobile, le signal d'information comportant la désignation d'identité de station de base permanente et une identité globale de cellule ; et
- modifier, au moyen de l'équipement terminal, le profil d'abonné sur la base de la désignation d'identité de station de base permanente reçue par l'équipement terminal de l'abonné à partir de la station de base en limitant ou en développant des services ou en modifiant des applications ;

2. Procédé selon la revendication 1, dans lequel la désignation d'identité de station de base permanente est transmise dans le canal de diffusion générale de cellule (CBCH).

3. Procédé selon la revendication 1 ou 2, dans lequel le réseau de communication mobile est basé sur une technologie numérique, tel que la technologie GSM.

4. Système destiné à modifier un profil d'abonné sur la base de l'identité de la station de base desservant un équipement terminal dans un réseau de communication mobile, ledit système comportant une station de base (1¹, ..., 1ⁿ) qui est adaptée en vue de transmettre des signaux d'information et l'équipement terminal (2) qui comporte une station mobile prévue avec un module d'identité d'abonné et qui est adaptée en vue de recevoir les signaux d'information, le système comportant :
- un serveur (4) comportant un logiciel de supervision (41) configuré pour créer et affecter à une station de base une désignation d'identité de station de base permanente qui identifie uniquement la station de base indépendamment de modifications de configuration de réseau de communication mobile ;
- le système comporte de moyens (3, 4, 41) en vue d'inclure dans les signaux d'information la désignation d'identité de station de base permanente de la station de base (1¹, ..., 1ⁿ) qui est indépendante des modifications de configuration dans le réseau de communication mobile et d'une identité globale de cellule ; et
- l'équipement terminal (2) comporte en outre des moyens (5) en vue de modifier, au moyen de l'équipement terminal, le profil d'abonné sur la base de la désignation d'identité (1¹, ..., 1ⁿ) de station de base permanente reçue par l'équipement terminal de l'abonné à partir de la station de base en limitant ou en développant des services ou en modifiant des applications.

5. Système selon la revendication 4, comportant en outre des moyens pour transmettre la désignation d'identité (1¹, ..., 1ⁿ) de station de base permanente sur le canal de diffusion générale de cellule (CBCH).

6. Système selon la revendication 4 ou 5, dans lequel le réseau de communication mobile est basé sur une technologie numérique, tel qu'une technologie GSM.
